# DEMANDE DE BREVET EUROPEEN

(11) **EP 0 546 873 A1**
(43) Date de publication de la demande: **16.06.1993**
(21) Numéro de dépôt: 92402975.4
(22) Date de dépôt: 03.11.1992
(51) Int. Cl.: B60N 3/08, B60N 3/14

(54) **Cendrier de véhicule automobile**

(30) Priorité: 12.12.1991 FR 9115449
(71) Demandeur: AUTOMOBILES PEUGEOT, F-75116 Paris (FR); AUTOMOBILES CITROEN, F-92200 Neuilly sur Seine (FR)
(72) Inventeur: Boboeuf, Marc, F-92700 Colombes (FR)
(74) Mandataire: Polus, Camille

(57) **Abrégé**

L'ensemble formant cendrier et allume-cigare électrique pour véhicule automobile comporte un boîtier (2) délimitant un premier logement (4) pour l'allume-cigare et un second logement pour une cuve à cendres, et un couvercle (12) de cuve à cendres monté articulé sur le boîtier. Le boîtier comporte un dispositif de commande d'ouverture (32, 33, 44, 52, 50, 90) du couvercle lors du déplacement de l'allume-cigare vers sa position de mise en incandescence.

## Description

La présente invention concerne un cendrier de véhicule automobile.

De manière classique, les véhicules automobiles sont équipés, à proximité du conducteur, d'un cendrier et d'un allume-cigare agencés à proximité l'un de l'autre sur une console ou un tableau de bord.

De plus en plus couramment, le véhicule comporte un boîtier encastré dans le tableau de bord ou la console et délimitant un premier logement pour l'allume-cigare et un second logement pour une cuve à cendres.

Pour des raisons d'esthétique et d'odeur, le second logement est fermé par un couvercle monté basculant sur le boîtier entre une position de fermeture dans laquelle il masque la cuve à cendres et une position d'ouverture.

Lorsque le conducteur ou le passager avant désire allumer une cigarette, il appuie sur l'allume-cigare pour le faire coulisser dans une douille d'alimentation électrique et ouvre le cendrier par basculement manuel du couvercle de ce dernier.

Dans un tel processus, l'utilisation de l'allume-cigare et l'ouverture du cendrier sont obtenues de manière indépendante et nécessitent deux actions manuelles, ce qui est gênant, et même dangereux, lorsque ces actions sont mises en oeuvre par le conducteur.

Pour remédier à cet inconvénient, la présente invention a pour but de fournir un boîtier logeant l'allume-cigare et le cendrier, limitant le nombre d'actions manuelles nécessaires pour leur utilisation.

A cet effet, la présente invention a pour objet un ensemble formant cendrier et allume-cigare électrique pour véhicule automobile, comportant un boîtier délimitant un premier logement pour l'allume-cigare et un second logement pour une cuve à cendres, et un couvercle de cuve à cendres monté articulé sur le boîtier, caractérisé en ce que l'allume-cigare comporte un dispositif de commande d'ouverture du couvercle lors du déplacement de l'allume-cigare vers sa position de mise en incandescence.

Selon d'autres caractéristiques :
- L'ensemble comporte des moyens de verrouillage du couvercle en position fermée comportant un premier organe mobile agencé dans le second logement, de retenue d'un second organe solidaire du couvercle, et le dispositif de commande comporte un organe de commande solidaire de l'allume-cigare et des moyens de liaison à effet de came entre l'organe de commande et le premier organe mobile.
- L'ensemble comporte des moyens de rappel du premier organe mobile vers sa position de verrouillage.
- L'ensemble comporte des moyens de sollicitation du couvercle vers sa position ouverte.
- Les moyens de liaison comportent un premier organe déplaçable en translation conjointement à l'allume-cigare et dans la même direction que ce dernier, et un second organe porté par le premier organe mobile des moyens de verrouillage, qui est monté coulissant dans une direction perpendiculaire au coulissement de l'allume-cigare.
- le premier organe déplaçable des moyens de liaison est une partie en saillie dans le second logement d'un organe d'actionnement situé dans le premier logement, le second organe des moyens de liaison étant une rampe inclinée du premier organe mobile.
- La partie en saillie de l'organe d'actionnement comporte un galet monté librement rotatif autour d'un axe parallèle à la rampe inclinée.
- Le galet et la rampe comportent des cannelures engrenantes.
- L'organe d'actionnement est un coulisseau coaxial à l'allume-cigare et traversé par celui-ci, actionné par l'organe de commande constitué d'une collerette solidaire de l'allume-cigare et en appui sur le bord d'une ouverture ménagée dans le coulisseau pour le passage de l'allume-cigare.
- Le coulisseau est déplaçable entre une première et une seconde positions respectivement de verrouillage et de déverrouillage du couvercle et l'ensemble comporte des moyens élastiques de rappel du coulisseau vers sa première position et des moyens de butée du coulisseau dans sa première position.
- L'ensemble comporte des moyens de guidage du coulissement du premier organe mobile constituant des moyens de retenue du premier organe mobile à l'encontre d'un mouvement perpendiculaire à sa direction de coulissement, une partie constituant un logement pour les moyens de rappel du premier organe mobile des moyens de verrouillage.
- Le premier organe mobile des moyens de verrouillage est une gâche et le second organe est un pêne.

La présente invention sera mieux comprise à la lecture de la description détaillée qui va suivre, faite en référence aux dessins annexés sur lesquels :
- la figure 1 est une vue en élévation de face, avec arrachement partiel, d'un ensemble formant cendrier et allume-cigare selon l'invention.
- la figure 2 est une coupe à plus grande échelle selon la ligne 2-2 de la figure 1, le couvercle étant en position fermée, avec arrachement partiel.
- la figure 3 est une vue analogue à la figure 2, le couvercle étant en position ouverte.
- la figure 4 est une section partielle selon la ligne 4-4 de la figure 2.
- la figure 5 est une section partielle selon la ligne 5-5 de la figure 2.
- la figure 6 est une section partielle selon la ligne 6-6 de la figure 2.

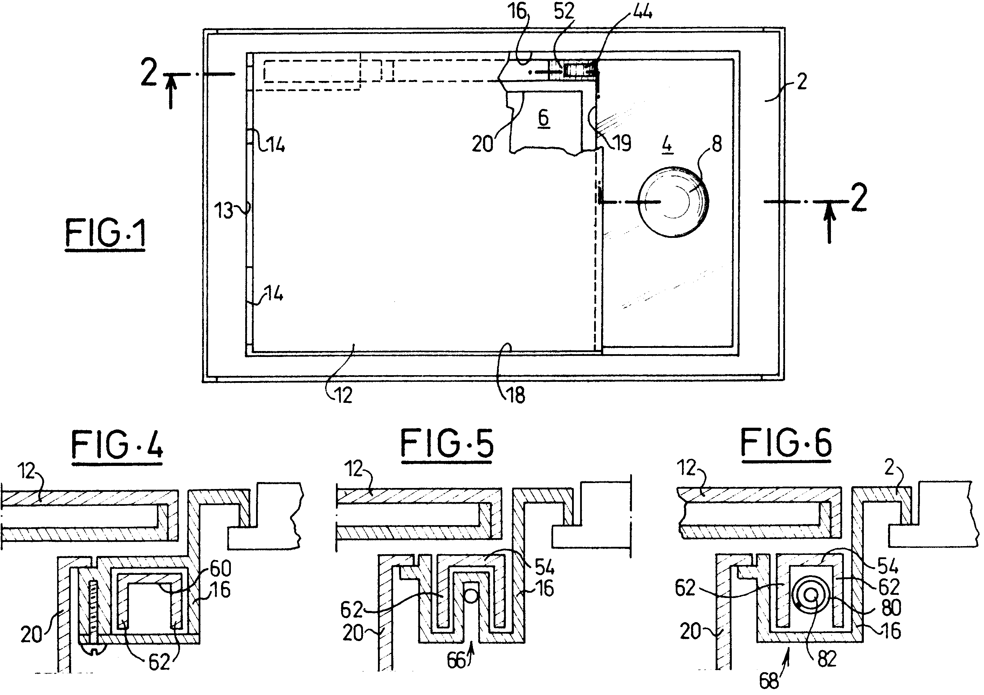

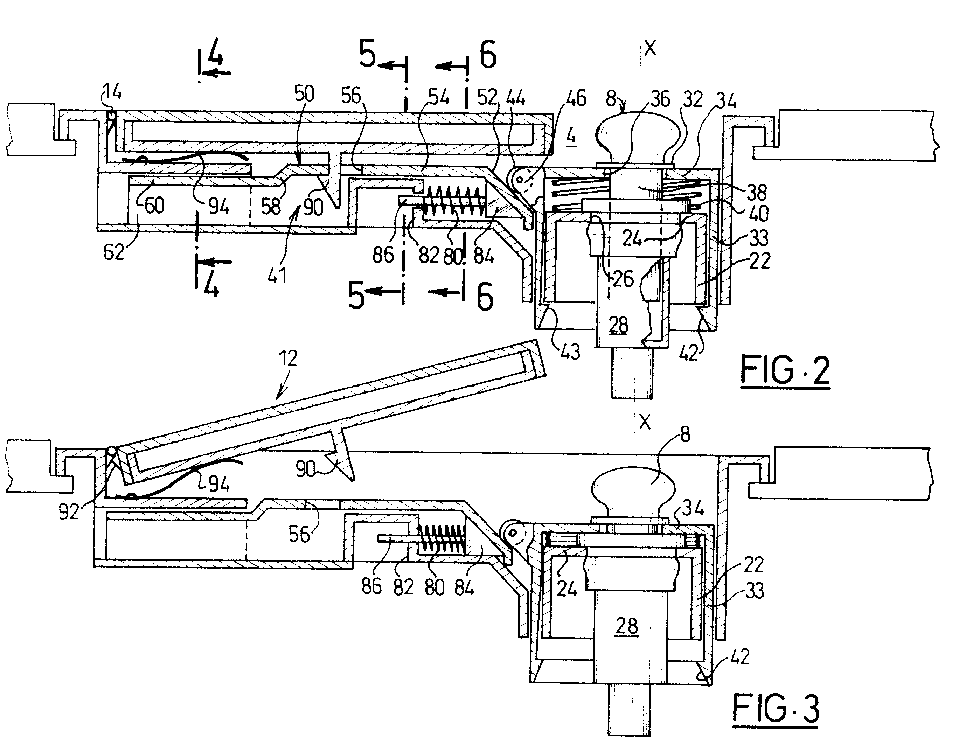

L'ensemble formant cendrier et allume-cigare représenté sur la figure 1 comporte un boîtier 2 encastrable délimitant un premier et un second logements parallélépipédiques ouverts 4, 6, respectivement.

Le premier logement 4 est destiné à recevoir un allume-cigare 8.

Un couvercle 12 est articulé sur un bord 13 du boîtier 2 à l'aide de charnières 14.

Le couvercle 12, en position fermée, recouvre l'ouverture du second logement 6, délimitée par deux bords longitudinaux 16 et 18 reliant le bord 13 à un bord opposé 19, séparant le second logement du premier logement.

Une cuve à cendres 20 est reçue dans le second logement 6, de manière amovible, pour permettre sa vidange.

Dans le premier logement 4 (voir figures 2 et 3) est agencé un support creux 22 comportant une paroi 24 transversale par rapport au premier logement et munie d'une ouverture circulaire traversante 26 d'axe XX.

Une douille 28 d'alimentation électrique de l'allume-cigare est fixée à travers l'ouverture 26 et comporte une face ouverte à travers laquelle est monté coulissant l'allume-cigare 8.

Selon l'invention l'allume-cigare 8 comporte une collerette 32, coopérant avec un coulisseau 33 monté coulissant dans la direction de l'axe XX autour du support creux 22.

Le coulisseau 33 comporte une paroi 34 parallèle à la paroi 24 du support 22 et comportant une ouverture circulaire 36 d'axe XX et de diamètre plus petit que le diamètre extérieur de la collerette 32.

L'ouverture 36 est traversée par une partie 38 de l'allume-cigare 30 s'étendant à partir de la collerette 32 et reçue partiellement dans la douille 28.

La collerette 32 est en appui sur la face de la paroi 34 du coulisseau 33 opposée au support 22.

Un ressort 40 est agencé entre les parois 24 et 34 de manière à solliciter la paroi 34 vers une position écartée de la paroi 24.

L'extrémité du coulisseau 33 éloignée de la paroi 34 comporte une partie formant crochet 42 coopérant avec l'extrémité ouverte 43 du corps 22 pour limiter l'écartement entre les parois 24 et 34 à une valeur prédéterminée.

Le coulissement du coulisseau 33 est ainsi limité entre une position de repos écartée de la paroi 24 représentée sur la figure 2 dans laquelle le crochet 42 est en butée contre l'extrémité 43 et une position active rapprochée de la paroi 24 représentée sur la figure 3.

Le coulissement vers ladite position active est obtenu par enfoncement de l'allume-cigare 8 dans la douille 28, la collerette 32 provoquant alors le coulissement du coulisseau vers sa position active à l'encontre du ressort 40.

Le coulisseau 33 comporte des moyens de liaison à effet de came avec des moyens de verrouillage 41 du couvercle 12 agencés dans le second logement 6.

Le coulisseau 33 constitue un organe d'actionnement des moyens de liaison commandé par la collerette 32.

Les moyens de liaison comportent un premier organe constitué par un galet denté 44 monté librement rotatif dans une chape 46 agencée à proximité du bord 16 du boîtier et faisant saillie vers le second logement 6 (voir également la figure 1).

Le galet 44 coopère avec un premier organe formant gâche 50 des moyens de verrouillage 41.

La gâche 50 est montée coulissante entre le bord de la cuve 20 et le bord 16 du boîtier sous le couvercle 12.

La gâche 50 comporte, à proximité du coulisseau 33, une extrémité constituant le second organe des moyens de liaison, en forme de rampe 52 inclinée par rapport à l'axe X-X d'un angle d'environ 45°, le galet 44 étant en contact avec la rampe 52.

La rampe 52 est prolongée vers le bord 13 du couvercle par une première paroi plane 54, parallèle à la paroi 24 du support 22, la paroi plane 54 comportant une ouverture 56 traversante.

La première paroi plane 54 est prolongée vers le bord 13 par une paroi 58 inclinée vers l'intérieur du boîtier, elle-même prolongée par une seconde paroi plane 60, parallèle à la première paroi plane 54 et décalée vers l'intérieur du boîtier par rapport à cette dernière.

Deux parois latérales 62 de la gâche 50 s'étendent vers l'intérieur du boîtier parallèlement au bord 16 de ce dernier.

Le boîtier comporte des moyens de guidage en coulissement de la gâche 50 comportant trois éléments représentés sur les figures 4 à 6.

Un premier élément 64 représenté sur la figure 4 est constitué par un tunnel entourant la seconde paroi 60 et la partie des parois latérales 62 correspondantes pour les retenir à l'encontre d'un mouvement perpendiculaire à la direction du coulissement et les guider dans la direction du coulissement.

Un deuxième élément 66 représenté sur la figure 5 est constitué d'un étrier guidant le coulissement de la première paroi plane 54 et retient celle-ci à l'encontre d'un mouvement perpendiculaire à la direction de coulissement vers l'intérieur du boîtier.

Un troisième élément 68 à section en forme de U, représenté sur la figure 6, prolonge le deuxième élément vers la rampe 52 et constitue un logement destiné à recevoir un ressort 80 ayant une première extrémité en appui sur une paroi d'extrémité transversale 82 du troisième élément (voir figure 2), et un coin 84 fixé sur la face de la rampe 52 opposée au galet 44 et constituant un appui pour la seconde extrémité du ressort 80.

Le ressort 80 entoure une tige 86 fixée sur le coin 84 et traversant la paroi 82.

Le ressort 80 constitue des moyens de rappel de la gâche 50 vers sa position de fermeture.

Le couvercle (voir figure 2) est un corps creux parallélépipédique dont la face en vis-à-vis de l'ouverture 56 de la gâche 50 comporte un crochet 90 formant pène destiné à être retenu par la gâche à travers l'ouverture 56 lorsque l'ensemble est verrouillé, comme représenté sur la figure 1.

Le boîtier comporte des moyens de rappel du couvercle 12 vers sa position d'ouverture.

Les moyens de rappel sont constitués d'un ressort en épingle 92 agencé entre le boîtier et le couvercle, à proximité du bord 13 du boîtier.

Sur les figures 2 et 3, on a représenté également une lame de ressort 94 destinée à améliorer l'action du ressort en épingle 92 en début d'ouverture du couvercle 12.

Le couvercle étant en position verrouillée, comme représenté sur la figure 2, lorsque l'utilisateur appuie sur l'allume-cigare 8 afin de porter sa résistance à incandescence, la collerette 32 provoque le coulissement du coulisseau 33.

Lors de ce coulissement, le galet 44, par effet de came, provoque le déplacement de la gâche 50 vers la gauche en regardant la figure 2.

Ce déplacement est tel que le crochet 90 est dégagé du bord de l'ouverture 56 de la gâche, les moyens de rappel du couvercle entraînant alors ce dernier en position d'ouverture (voir figure 3).

On a ainsi réalisé un ensemble dans lequel la mise en incandescence de l'allume-cigare et l'ouverture de la partie formant cendrier sont obtenues par une seule opération.

Après mise en incandescence de la résistance de l'allume-cigare, celui-ci revient dans sa position initiale pour être saisi par l'utilisateur, le coulisseau 33 et la gache 50 revenant également dans leur position de départ sous l'effet des ressorts 40 et 80, respectivement.

En variante, la position relative des charnières 14 et des moyens de verrouillage 41 peut être modifiée.

## Revendications

**1.-** Ensemble formant cendrier et allume-cigare électrique pour véhicule automobile, comportant un boîtier (2) délimitant un premier logement (4) pour l'allume-cigare et un second logement (6) pour une cuve à cendres, et un couvercle (12) de cuve à cendres monté articulé sur le boîtier, caractérisé en ce que l'allume-cigare comporte un dispositif de commande d'ouverture (32, 33, 44, 52, 50, 90) du couvercle lors du déplacement de l'allume-cigare vers sa position de mise en incandescence.

**2.-** Ensemble selon la revendication 1, caractérisé en ce qu'il comporte des moyens de verrouillage (41) du couvercle en position fermée comportant un premier organe mobile (50) agencé dans le second logement, de retenue d'un second organe (90) solidaire du couvercle, et en ce que le dispositif de commande comporte un organe de commande (32) solidaire de l'allume-cigare et des moyens de liaison (33, 44, 52) à effet de came entre l'organe de commande (32) et le premier organe mobile (50).

**3.-** Ensemble selon la revendication 2, caractérisé en ce qu'il comporte des moyens de rappel (80) du premier organe mobile (50) vers sa position de verrouillage.

**4.-** Ensemble selon l'une quelconque des revendications 1 à 3, caractérisé en ce qu'il comporte des moyens de sollicitation (92, 94) du couvercle (12) vers sa position ouverte.

**5.-** Ensemble selon l'une quelconque des revendications 2 à 4, caractérisé en ce que les moyens de liaison comportent un premier organe (33, 44) déplaçable en translation conjointement à l'allume-cigare et dans la même direction que ce dernier, et un second organe (52) porté par le premier organe mobile (50) des moyens de verrouillage (41), qui est monté coulissant dans une direction perpendiculaire au coulissement de l'allume-cigare.

**6.-** Ensemble selon la revendication 5, caractérisé en ce que le premier organe déplaçable (44) des moyens de liaison est une partie en saillie dans le second logement d'un organe d'actionnement (33) situé dans le premier logement (4), le second organe des moyens de liaison étant une rampe inclinée (52) du premier organe mobile (50).

**7.-** Ensemble selon la revendication 6, caractérisé en ce que la partie en saillie de l'organe d'actionnement (33) comporte un galet (44) monté librement rotatif autour d'un axe parallèle à la rampe inclinée (52).

**8.-** Ensemble selon la revendication 7, caractérisé en ce que le galet (44) et la rampe (52) comportent des cannelures engrenantes.

**9.-** Ensemble selon l'une quelconque des revendications 6 à 8, caractérisé en ce que l'organe d'actionnement est un coulisseau (33) coaxial à l'allume-cigare et traversé par celui-ci, actionné par l'organe de commande (32) constitué d'une collerette solidaire de l'allume-cigare et en appui sur le bord d'une ouverture (36) ménagée dans le coulisseau pour le passage de l'allume-cigare.

**10.-** Ensemble selon la revendication 9, caractérisé en ce que le coulisseau (33) est déplaçable le long d'un corps creux (22) entre une première et une seconde positions respectivement de verrouillage et de déverrouillage du couvercle (12), et en ce qu'il comporte des moyens élastiques de rappel (38) du coulisseau vers sa première position et des moyens de butée (42, 43) pour le coulisseau dans cette première position, constitués d'une partie formant crochet (42) du coulisseau d'une part et d'une extrémité ouverte (43) du corps creux (42).

**11.-** Ensemble selon la revendication 2 à 10, caractérisé en ce qu'il comporte des moyens de guidage (64, 66, 68) du premier organe mobile (50) dans sa direction de coulissement, une partie (68) de ces moyens de guidage (68) constituant un logement pour les moyens de rappel (80) du premier organe mobile (50) des moyens de verrouillage.

**12.-** Ensemble selon l'une quelconque des revendications 2 à 11, caractérisé en ce que le premier organe mobile (50) des moyens de verrouillage (41) est une gâche, le second organe (90) étant un pène.
